# FASCICULE DE BREVET EUROPEEN

(11) **EP 1 538 856 B1**
(45) Date de publication et mention de la délivrance du brevet: **03.06.2009**
(21) Numéro de dépôt: 04106255.5
(22) Date de dépôt: 02.12.2004
(51) Int. Cl.: H04W 8/18

(54) **Procédé et système de configuration automatique d'appareil dans un réseau de communications**
Verfahren und System zur automatischen Konfigurierung eines Gerätes in einem Kommunikationsnetz
Method and system for automatically configuring a device in a communication network

(30) Priorité: 04.12.2003 FR 0350971
(43) Date de publication de la demande: 08.06.2005
(73) Titulaire: Gemalto SA, 92190 Meudon (FR)
(72) Inventeur: Quetglas, Stéphane, 13009 Marseille (FR); Dumay, Philippe, 13008 Marseille (FR)

(56) Documents cités:
- EP-A- 0 562 890
- WO-A-97/42782
- WO-A-03/067917
- GB-A- 2 366 700

## Description

L'invention concerne le domaine des réseaux de communications sans fil notamment du type GSM, acronyme pour l'expression anglo-saxonne "Global System for Mobile Communication".

Elle vise plus particulièrement un procédé et système de configuration automatique des appareils mobiles des réseaux utilisant une carte d'identification d'abonné connue sous le nom SIM ou U(SIM), acronyme de l'expression anglo-saxonne "Universal (Subscriber Identity Module)". Il existe différentes manières de configurer une carte, comme par exemple celle décrite dans le document EP-A-0 562 890 du 29 septembre 1993, décrivant une reconfiguration d'une carte SIM par envoi de SMS dédiés à la carte.

De nos jours l'accès à des données complexes de type multimédia, photo, video, audio via différents supports, protocoles ou services de communication tels que WAP, MMS, GPRS, e-mail, SyncML, etc, requiert une configuration préalable des mobiles à l'aide de paramètres multiples et complexes.

Il existe différentes manières ci-après de configurer un mobile. Il existe notamment une pré-configuration réalisée par le fabricant en usine ou une configuration plus ou moins manuelle réalisé par l'abonné avec l'aide d'un service clientèle.

Les configurations peuvent être effectuées pas à pas avec des explications orales d'un service clientèle ou suite à une requête de l'abonné sur internet d'un besoin de configuration donnant lieu à une configuration automatique par messages courts type SMS ou une mise à disposition d'une description des opérations à faire sur un site internet.

Ces opérations étant relativement longues et complexes pour l'utilisateur, la demanderesse a présenté récemment un procédé de configuration de l'appareil automatique dans son offre intitulée «GemConnect Device manager» qui consiste à chaque introduction de la carte SIM dans un appareil de proposer à l'utilisateur une configuration de son appareil; En cas d'acceptation, la configuration est réalisée automatiquement via le réseau.

Cependant, à l'heure actuelle, lorsque l'utilisateur dispose de plusieurs appareils, ou qu'il change de lieu fréquemment, notamment de pays ayant une couverture de réseau différente et que l'opérateur du lieu n'offre pas les meilleurs services et/ou accès, l'utilisateur ignore quels appareils supportent les services permis par son appareil et son abonnement et s'il convient de faire ou refaire une configuration pour un fonctionnement optimal.

Les échanges entre le mobile et la carte et le réseau étant normalisés, il n'est pas possible à ce jour d'interroger le mobile pour savoir s'il a été configuré et de quelle manière.

L'invention vise à permettre une configuration de mobile le plus rapidement possible et à bon escient, même quand l'utilisateur dispose de plusieurs mobiles qu'il utilise fréquemment avec la même carte.

Le principe de l'invention consiste selon un mode de réalisation préféré, en un programme applicatif qui est apte à mettre en oeuvre des tests adéquats pour analyser et détecter un défaut ou besoin de configuration de l'appareil par rapport à des informations préalablement collectées et stockées.

Le défaut ou besoin de configuration peut aussi être détecté en fonction d'absence d'indication ou d'événement répertoriés et/ou en fonction d'événements ou critères détectés tels que le lieu géographique où se trouve l'appareil, préférences, souhaits, utilisateur etc...

Ainsi, selon un mode de mise en oeuvre, l'invention a pour objet un procédé pour établir automatiquement une configuration d'un appareil de communication fonctionnant avec une carte d'identification d'abonné dans un réseau de communication, dans lequel la configuration de l'appareil est établie via le réseau, suite à détection et communication de son identifiant sur le réseau à l'aide de la carte.

Il se distingue en ce qu'il comprend une étape préalable selon laquelle on détecte un besoin de configuration à l'aide d'événements ou absence d'événements mémorisés dans la carte.

A cet effet, le procédé comporte au moins une étape de test consistant à déterminer qu'une au moins des conditions suivantes est remplie:
a) l'appareil courant a déjà été identifié par la carte,
b) l'appareil est déjà configuré,
c) un nombre maximal de sollicitations de configuration auprès de l'utilisateur a été atteint.

Il comporte également les caractéristiques suivantes :
- le test b) consiste à déterminer si l'appareil a déjà été configuré en rapport ou non un contexte donné ;
- le contexte comporte une indication du réseau qui a été utilisé et/ou du lieu géographique dans lequel se trouvait l'appareil et/ou du type de technologie de réseau et/ou de l'opérateur du réseau. Ainsi, le besoin de configuration peut être détecté en fonction d'indications (ou absence d'indication) relatives au type de technologie de réseau, et/ou opérateur de réseau, et/ou un critère.
- on répertorie au préalable dans une zone mémoire chaque identifiant d'appareil avec lequel la carte à été mise en relation ainsi que des événements liés à la configuration de chaque appareil parmi un groupe d'événements suivants :

- appareil configuré ou non,
- nombre de sollicitation de configuration
- contexte de la configuration,

Dans le fonctionnement, à la mise sous tension du mobile, l'application requiert un identifiant de l'appareil et compare la valeur de l'identifiant à une liste d'identifiants d'appareils connus antérieurement et répertoriés. Quand une condition spécifique est remplie, l'application transmet un message de notification contenant l'identifiant de l'appareil à un serveur prédéterminé.

Le serveur est capable d'analyser la valeur de l'identifiant de manière à déterminer son modèle et son type. Cette information est utilisée pour connaître les capacités les plus élevées de l'appareil, tel que le protocole supporté pour une configuration à distance, les services disponibles (messagerie électronique « e-mail », multimédia MMS, navigateur WAP,etc...) situation d'itinérance pour offrir les meilleurs services possibles.

L'invention a également pour objet un système de réseau de communication sans fil pour des appareils de communication comportant un serveur de configuration automatique des appareils via le réseau. Le système se distingue qu'il comporte :
- au moins une zone mémoire répertoriant des identifiants d'appareils avec lesquels la carte à été mise en relation ainsi que des événements liés à la configuration de chaque appareil,
- au moins une application apte à répertorier lesdits événements et détecter le besoin de configuration en fonction de ces événements.

L'invention a également pour objet une carte d'identification d'abonné apte à coopérer avec un appareil de communication mobile pour autoriser un service de communication dans un réseau de communication.

Elle se distingue en ce qu'elle comprend une application apte à répertorier des événements relatifs à une configuration de chaque appareil avec lequel elle est mise en relation et à détecter un besoin de configuration de l'appareil en fonction de ces événements ou absence d'événements mémorisés par l'application.

En particulier, la carte est apte à répertorier toute sorte d'information relative à la configuration ou divers contextes de la configuration tel que le type de technologie de réseau, l'opérateur de réseau; De même elle peut répertorier des indications émises par la carte ou par l'utilisateur telles que des indications sur le fait que l'appareil est ou non configuré, nombre de sollicitations de configuration, acceptations, les refus de l'utilisateur, ses préférences de configuration...

Un exemple de réalisation de l'invention va être décrit en relation aux figures ci-après sur lesquelles :
- La figure 1 est un schéma illustrant le système de réseau de communications mis en oeuvre par l'invention ;
- la figure 2 est un schéma d'une structure de puce de carte SIM mis en oeuvre par l'invention ;
- la figure 3 un schéma illustrant le procédé de configuration selon l'invention dans le cas d'un mobile connu ;
- la figure 4 est un schéma d'une table de statut de mobile relatif à la configuration ;
- la figure 5 est un schéma illustrant le procédé de configuration selon l'invention dans le cas d'un nouveau mobile ;
- la figure 6 est un schéma d'une table de statut de mobile relatif à la configuration dans le cas d'un nouveau mobile ;

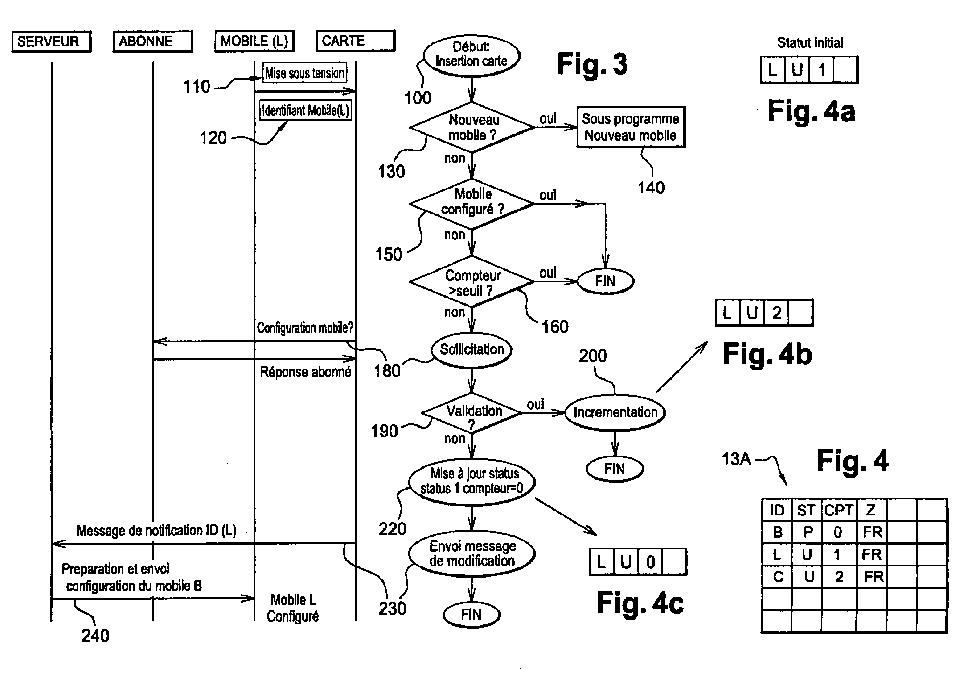

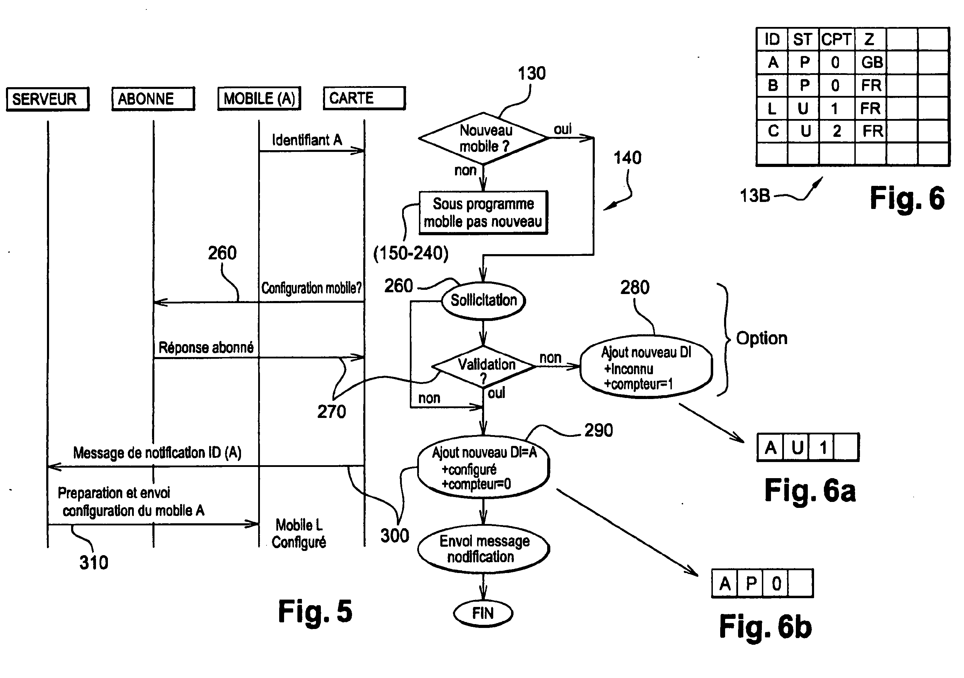

- Les figures 4a, 4b, 4c, 6a, 6b illustrent les différentes évolutions des valeurs de la table de statut.

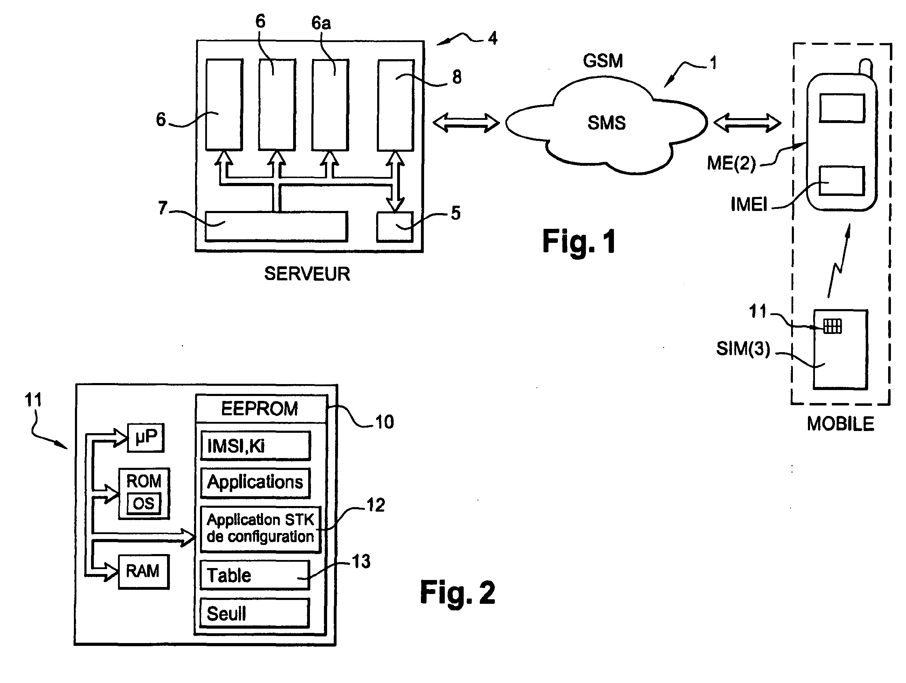

A la figure 1, l'invention utilise un système de réseau de communication 1 pour des appareils de communication cellulaire 2, dit mobile ME par la suite et fonctionnant avec une carte d'identification d'abonné 3 dit SIM ou (U)SIM.

Chaque mobile comporte un identifiant IMEI stocké dans une mémoire du mobile. Les réseaux peuvent être multiples et présenter différentes caractéristiques. Ils peuvent comprendre notamment un réseau de type GSM, GPRS, UMTS, WLAN...

Le réseau peut véhiculer des données sophistiquées multimédia de type MMS, des flux vidéo, audio.

Le système dans l'exemple comporte un serveur de configuration 4 relié au réseau de télécommunication par un canal de message court SMS. Ce serveur 4 comporte notamment :
- des moyens de réception 5 des identifiants de mobiles transmis en particulier à la demande de la carte SIM,
- une base d'identifiants 6 indiquant les capacités des mobiles,
- une base de données 6a relatives à l'abonnement souscrit par l'utilisateur indiquant notamment les services auxquels il a droit,
- une base 6b de profils de configuration,
- des moyens de traitement 7 aptes à identifier la configuration nécessaire ou optimale correspondant à chaque identifiant en réponse à la réception d'une notification de demande de configuration émise notamment à l'initiative de la carte,
- des moyens d'émission 8 aptes à émettre des instructions de configuration du mobile déterminé par les moyens de traitement 7 en réponse à la réception d'une notification contenant un identifiant IMEI,
- des interfaces 9 ou adaptateurs de mobile supportant des protocoles standards ou propriétaires tels que «smart messaging™», WAP™ , WLAN autres... permettant de communiquer selon les spécificités du mobile.

Le système comporte une zone mémoire 10 destiné à répertorier des événements liés à la configuration des mobiles que l'on verra par la suite. De préférence, cette zone 10 est dans une puce 11 de la carte 3 par commodité comme dans l'exemple,(figure 2).

Les appareils 2 de l'abonné peuvent être multiples, soit que l'abonné permute les appareils pendant l'abonnement ou les remplace par de nouveaux. Le cas échéant, l'abonné peut introduire sa carte 3 dans le mobile d'un tiers ou préter un de ses mobiles.

La puce électronique 11 de la carte d'identification d'abonné comporte de manière connue, un processeur relié via un bus de données et de commandes, à une mémoire programme ROM comprenant notamment un système d'exploitation de la carte et des algorithmes spécifiques, à une mémoire programmable 12 et à une mémoire vive RAM.

La mémoire programmable 12, notamment de type EEPROM, comprend notamment des données de l'abonné ou données relatives à son abonnement avec sa clé de chiffrement associé(IMSI, Ki) pour autoriser un service de communication et des applications spécifiques 12, 13. La carte est apte à coopérer avec un mobile qui peut être par exemple un téléphone, un assistant personnel PDA, ordinateur portable ou autre appareil doté d'une fonction et d'interface de communication.

Selon une caractéristique, la carte comprend un programme applicatif 12, dit application, stocké dans sa mémoire programmable et qui est capable de détecter un besoin de configuration du mobile dans lequel elle se trouve. Ce mobile est dit courant par la suite. L'application peut être par exemple du type Sim toolkit, ce qui signifie qu'elle utilise des jeux de commandes conformes à la recommandation GSM 11.14 permettant à la carte d'être « pro-active » dans le sens où elle prend des initiatives pour diriger notamment le mobile. Pendant l'exécution du programme par le processeur de la carte, la carte obtient du mobile l'émission d'un message contenant son code identifiant IMEI. Dans l'exemple, la carte a pris elle même la main des échanges avec le mobile.

Selon une caractéristique, l'application 12 répertorie dans la zone mémoire et dans un premier temps, un historique des événements ci-après relatifs à la configuration du mobile. La zone mémoire comporte une table 13 (figure 4), ou registre FIFO comportant en tête de colonne des événements (ST, CPT, Z...) et en tête de ligne des identifiants (A, B, L, C ...) d'appareils de l'abonné.

Les événements répertoriés dans l'exemple comprennent notamment l'état configuré (P)ou non (U) du mobile, le nombre de sollicitations (CPT) de configuration auprès de l'abonné, le contexte de la configuration (Z). Pour ce dernier, il peut s'agir d'une zone géographique dans laquelle se trouve le mobile à l'instant de la configuration,....

Tout autre contexte ou environnement, peut être pris en compte par l'invention notamment le type de technologie du réseau (WLAN, GPRS...), l'opérateur du réseau, la version de la configuration, la date ...

Les événements seront pris en compte ultérieurement dans le cadre de la mise en oeuvre du procédé de l'invention en relation avec les figures 3 et 5 pour un mobile L connu et un nouveau mobile A possédant tous deux un navigateur WAP.

A la figure 3, le procédé de l'invention comporte les étapes et interactions ci-après effectuées entre les entités du système serveur, abonné, mobile, carte schématisés par des lignes verticales.

Lors de la mise sous tension 110 d'un appareil de communication ou mobile "L" comprenant une carte d'identification d'abonné SIM, (U)SIM, qui vient d'être insérée ou réinsérée 110, il s'établit une procédure standard de démarrage (non décrite).

Ensuite, le procédé de l'invention met en oeuvre une étape préalable selon laquelle on détecte d'un besoin de configuration.

Pour cela, lorsque la carte a récupéré 120 la valeur (L) de l'identifiant du mobile et avant de le transmettre sur le réseau ou avant de solliciter l'accord de l'abonné, on procède à un premier test comparatif 130 permettant de savoir si le mobile est un nouveau mobile pour la carte.

A cet effet, le test consiste à rechercher la présence de la valeur (L) dans la table 13 A. A la figure 4a, on a les valeurs U et 1 initiales associés au mobile L. Elles signifient respectivement que le mobile L n'a pas été configuré et que l'utilisateur a déjà refusé une fois sa configuration.

Si la recherche est infructueuse, on passe au sous programme 140 de la figure 5.

Dans le cas contraire, mobile connu par la carte, le programme conduit à un second test 150 consistant à déterminer le statut du mobile. En l'occurrence, on détermine si le mobile a déjà été configuré. Le test consiste à lire la valeur (P) ou (U) correspondant à la valeur (L).

Si la valeur indique que le mobile a déjà été configuré le programme stoppe et l'abonné utilise normalement le mobile sans perte de temps et sans plus solliciter le serveur du réseau.

Par contre si la valeur indique l'absence de configuration du mobile (branche non), cela est interprété comme un besoin de configuration et le programme se branche sur un troisième test 160 consistant à déterminer si le nombre de sollicitations de configuration automatique du mobile préalablement faites à l'utilisateur est inférieur à un seuil donné, «3» par exemple.

A cet effet, la carte comporte une zone mémoire comportant un compteur, représenté dans l'exemple, par un champ CPT dans la table contenant une valeur représentative du nombre de sollicitations.

Si le compteur de sollicitation est supérieur au seuil, alors il est mis fin au programme et on évite ainsi de trop solliciter l'utilisateur pour une configuration qu'il ne souhaite pas à priori.

Si le compteur ne dépasse pas le seuil, l'utilisateur est sollicité à l'étape 180 par un affichage à l'écran du mobile. L'abonné répond et à l'étape 190 on effectue un test de validation : en cas de refus, le compteur de sollicitation est incrémenté à 2 à l'étape 200 (figure 4b) avant de mettre fin au programme.

En cas d'acceptation de la configuration automatique, le programme passe à l'étape 220 et met à jour la colonne d'état de configuration en indiquant par «P» que le mobile va être configuré et par « 0 » dans la colonne CPT (figure 4c).

A la suite, la carte envoie un message de notification 230 avec l'identifiant du mobile (L) sur le réseau afin d'avoir une configuration automatique.

A l'étape 240, à partir de l'identifiant du mobile, le serveur prépare les paramètres de configuration du navigateur WAP et les formatte en utilisant le protocole de configuration à distance supporté par le mobile L:
* page d'accueil: wap.home.com
* adresse IP de la passerelle WAP: 123.456.123.456
* port de la passerelle WAP: 4201
* identifiant utilisateur de la passerelle WAP: wap
* mot de passe de la passerelle WAP: wap
* nom du point d'accès GPRS: apn.gprs.wap

Le mobile L reçoit les paramètres et les stocke dans sa mémoire pour configurer le navigateur WAP après confirmation par l'abonné. Il est alors mis fin au programme de configuration et l'abonné peut utiliser le navigateur pour accéder à des sites WAP.

La mise à jour de la table d'état peut également s'effectuer également après que la configuration ait été achevée avec succès.

Par contre, lorsque le premier test 130 est positif, c'est à dire qu'un nouveau mobile a été détecté, le programme se branche sur le sous-programme 140 objet de la figure 5.

Dans une option préférée du procédé, à l'étape 260 le sous-programme sollicite au préalable l'accord de l'utilisateur pour la configuration, et récupère sa réponse.

A l'étape 270, le programme procède à un test pour savoir si l'abonné accepte ou non la configuration et en cas d'acceptation, le programme ajoute le nouvel identifiant A dans la table 13b, indique l'état configuré «P» et met le compteur de sollicitations infructueuses égal à zéro.

Par contre en cas de refus de l'abonné pour une configuration, le programme procède à l'étape 280 à l'ajout du nouvel identifiant dans la table, indique l'état non configuré «U» et met le compteur de sollicitations infructueuses égal à « 1 » (figure 6a).

Selon une option préférée du procédé, il n'est pas demandé l'avis à l'utilisateur et la configuration s'effectue à son insu et de manière transparente.

Le programme passe alors à l'étape 290 et ajoute directement l'identifiant A du mobile dans la table 13b, met à jour son état en marquant «P» et indique un nombre de sollicitations infructueuses égal à zéro (figure 6).

Ensuite, à l'étape 300 le message de notification est envoyé au serveur pour effectuer la configuration comme précédemment.

D'autres colonnes peuvent être ajoutées pour y mentionner des paramètres tels que ceux relatifs au contexte de la configuration. Des colonnes peuvent comprendre par exemple une indication de zone géographique (pays GB, FR, autre région), le type de technologie du réseau (WLAN, GPRS..), l'opérateur du réseau, la version de la configuration, la date...

Ainsi, par exemple, des réseaux WLAN, GPRS, UMTS, des opérateurs peuvent être souhaités selon la zone géographique dans laquelle se trouve le mobile. De même des services peuvent être accessibles dans une zone géographique et pas dans d'autres.

Les données relatives à la configuration notamment le contexte peuvent être utilisées par la carte ou transmises au serveur pour y être analysées et déclencher une action spécifique permettant de mieux servir l'abonné.

L'invention trouve un autre intérêt dans la configuration d'un appareil selon des directives ou critères choisis par l'abonné.

Par exemple, l'abonné choisi un type de technologie de réseau, ou un nouvel opérateur et obtient une configuration optimisée. La proposition de configuration, ou directement la configuration peut s'effectuer selon le lieu où se trouve l'appareil qui est détecté automatiquement par le réseau. Inversement, l'abonné peut obtenir du serveur une indication de lieu géographique dans lequel il doit se trouver pour satisfaire une utilisation optimisée selon son choix.

Dans le fonctionnement, il suffit que le programme applicatif des figures 3 et 5 comporte une étape de démarrage déclenchée non pas par l'insertion de la carte mais par une instruction ou sélection de l'abonné dans un menu de l'appareil comportant un choix de technologies et/ou d'opérateurs ou autres. Le programme de l'invention recherchera parmi les événements stockés si l'appareil a déjà été configuré en fonction d'un contexte donné mais aussi en fonction d'un critère donné avant d'effectuer ou de proposer la configuration automatique.

## Revendications

1. Procédé pour établir une configuration d'un composant compris dans un ensemble terminal (MOBILE) comprenant un appareil de communication (2) et une carte d'identification (3), d'un appareil de communication (2) fonctionnant avec une carte d'identification d'abonné (3) dans un réseau de communications sans fil (1), dans lequel la configuration de l'appareil est établie via le réseau, suite à détection et communication de son identifiant sur le réseau à l'aide de la carte (310), **caractérisé en ce que** la configuration est appliquée à l'appareil de communication (2) et le procédé comprend une étape préalable selon laquelle on lit dans un composant de l'ensemble terminal un état indiquant un besoin de configuration de l'appareil de communication.

2. Procédé selon la revendicaton 1, **caractérisé en ce que** l'étape préalable selon laquelle on lit dans un composant de l'ensemble terminal (MOBILE) est une étape selon laquelle on lit dans la carte d'identification (3).

3. Procédé selon la revendication 1, **caractérisé en ce que** l'état indiquant un besoin de configuration est la présence d'événement lié à la configuration de chaque appareil.

4. Procédé selon la revendication 1, **caractérisé en ce que** l'état indiquant un besoin de configuration est l'absence d'événement lié à la configuration de chaque appareil.

5. Procédé selon l'une des revendications 1 à 4, **caractérisé en ce que** l'état indiquant un besoin de configuration inclut une indication selon laquelle :
a)l'appareil courant a déjà été identifié par la carte,
b) l'appareil est déjà configuré,
c) un nombre maximal de sollicitations de configuration auprès de l'utilisateur a été atteint.

6. Procédé selon la revendication précédente, **caractérisé en ce que** l'indication b) indique si l'appareil courant a déjà été configuré en rapport ou non avec un contexte donné.

7. Procédé selon la revendication 6, **caractérisé en ce que** le contexte comporte une indication du réseau qui a été utilisé et/ou du lieu géographique dans lequel se trouvait l'appareil et/ou du type de technologie de réseau et/ou de l'opérateur du réseau, et/ou un critère.

8. Procédé selon l'une des revendications précédentes, **caractérisé en ce qu'**on répertorie au préalable dans une zone mémoire chaque identifiant d'appareil avec lequel la carte a été mise en relation ainsi que des événements liés à la configuration de chaque appareil parmi au moins un groupe d'événements suivants :
• appareil configuré ou non,
• nombre de sollicitation de configuration,
• contexte de la configuration.

9. Procédé selon l'une des revendications précédentes, **caractérisé en ce que** l'on mémorise les évènements dans la carte et/ou on réalise le test dans la carte.

10. Carte d'identification d'abonné (3) apte à coopérer avec un appareil de communication mobile (2) pour autoriser un service de communication dans un réseau de communication, **caractérisée en ce qu'**elle comprend une application (12) apte à lire un état indiquant un besoin de configuration de l'appareil de communication.

11. Carte d'identification d'abonné (3) selon la revendication 10, **caractérisée en ce qu'**elle comprend une zone mémoire comportant une liste d'identifiants d'appareils avec lesquels la carte a été mise en relation ainsi qu'une liste d'événements correspondants parmi un groupe d'événements suivants :
• appareil configuré ou non,
• contexte de la configuration,
• nombre de sollicitations de configuration.

12. Carte d'identification d'abonné (3) selon l'une des revendications 10 et 11, **caractérisée en ce que** l'état indiquant un besoin de configuration est contitué d'indications relatives au type de technologie de réseau, et/ou opérateur de réseau.

13. Réseau de communication comprenant au moins un serveur, une série d'ensembles terminaux (MOBILE) comprenant chacun un appareil de communication (2) et une carte d'identification d'abonné (3), **caracterisé en ce que** chaque carte d'identification d'abonné est conforme à la revendication 10.

## Claims

1. A method for setting the configuration of a component included in a terminal system (MOBILE) including a communication device (2) and an identification card (3) of a communication device (2) operated with a subscriber identification card (3) in a wireless communication network (1), wherein the configuration of the device is made through the network, further to a detection and the communication of the identification thereof on the network, using the card (310), **characterized in that** the configuration is applied to the communication device (2) and **in that** the method includes a previous step according to which a condition indicating a need for a configuration of the communication device is read in one component of the terminal system.

2. Method according to claim 1, **characterized in that** the previous step according to which a component of the terminal system (MOBILE) is read is a step according to which the identification card (3) is read.

3. Method according to claim 1, **characterized in that** the condition indicating a need for a configuration is the presence of events related to the configuration of each device.

4. Method according to claim 1, **characterized in that** the condition indicating a need for a configuration is the absence of events related to the configuration of each device.

5. Method according to one of claims 1 to 4, **characterized in that** the condition indicating a need for a configuration includes an indication according to which:
a) the current device has already been identified by the card,
b) the device has already been configured,
c) a maximum number of requests for a configuration by the user has been reached.

6. Method according to the preceding claim, **characterized in that** the indication b) indicates whether the current device has already been configured in relation or not with a given context.

7. Method according to claim 6, **characterized in that** the context includes an indication of the network which has been used and/or of the geographic location where the device was and/or of the type of the network technology and/or of the network operator, and/or of a criterion.

8. Method according to one of the preceding claims, **characterized in that** each device identifier which the card has been connected to is previously stored in a memory zone as well as events connected to the configuration of each device among a group of the following events:
* device configured or not,
* context of the configuration,
* count of requests for a configuration.

9. Method according to one of the preceding claims, **characterized in that** the events are stored in the card and/or the test is carried out in the card.

10. A subscriber identification card (3) able to cooperate with a mobile communication device (2) to authorize a communication service in a communication network, **characterized in that** the subscriber identification card includes an application (12) able to read a condition indicating a need for a configuration of the communication device.

11. Subscriber identification card (3) according to one of claims 10 and 11, **characterized in that** the subscriber identification card includes a memory zone including a list of device identifiers which the card has been connected to, as well as a list of corresponding events among a group of the following events:
* device configured or not,
* context of the configuration,
* count of requests for a configuration.

12. Subscriber identification card (3) according to one of claims 10 and 11, **characterized in that** the condition indicating a need for a configuration is constitued of indications relating to the type of network technology and/or the network operator.

13. A communication network including at least one server, a series of terminal systems (MOBILE), each including a communication device (2) and an identification card (3), **characterized in that** each identification card complies with claim 10.

## Patentansprüche

1. Verfahren zur Herstellung einer Konfiguration einer Komponente, die in einem Terminalssystem (MOBILE) inbegriffen ist, welches ein Kommunikationsgerät (2) und eine Kennkarte (3) umfasst, wobei ein Kommunikationsgerät (2) mit einer Abonnentenkennkarte (3) in einem drahtlosen Kommunikationsnetz (1) arbeitet, in dem die Konfiguration des Geräts über das Netz im Anschluss an die Feststellung und die Kommunikation ihrer Kennung im Netz mithilfe der Karte (310) hergestellt wird, **dadurch gekennzeichnet, dass** die Konfiguration auf das Kommunikationsgerät (2) angewendet wird und das Verfahren eine vorherige Stufe umfasst, gemäß derer in einer Komponente des Terminalssytems ein Zustand abgelesen wird, der einen Konfigurationsbedarf des Kommunikationsgeräts angibt.

2. Verfahren gemäß Anspruch 1, **dadurch gekennzeichnet, dass** die vorherige Stufe, gemäß derer in einer Komponente des Terminalssytems (MOBILE) gelesen wird, eine Stufe ist, gemäß derer in der Kennkarte (3) gelesen wird.

3. Verfahren gemäß Anspruch 1, **dadurch gekennzeichnet, dass** der einen Konfigurationsbedarf anzeigende Zustand das Vorhandensein eines mit der Konfiguration jedes Geräts verbundenen Ereignisses ist.

4. Verfahren gemäß Anspruch 1, **dadurch gekennzeichnet, dass** der einen Konfigurationsbedarf anzeigende Zustand das Fehlen eines mit der Konfiguration jedes Geräts verbundenen Ereignisses ist.

5. Verfahren gemäß Anspruch 1 bis 4, **dadurch gekennzeichnet, dass** der einen Konfigurationsbedarf anzeigende Zustand eine Angabe beinhaltet, gemäß derer:
a) das aktuelle Gerät bereits durch die Karte identifiziert ist
b) das Gerät bereits konfiguriert ist
c) eine maximale Anzahl von Konfigurationsanforderungen beim Nutzer erreicht ist.

6. Verfahren gemäß dem vorherigen Anspruch, **dadurch gekennzeichnet, dass** die Angabe b) angibt, ob das aktuelle Gerät bereits im Verhältnis mit einem bestimmten Kontext konfiguriert ist oder nicht.

7. Verfahren gemäß Anspruch 6, **dadurch gekennzeichnet, dass** der Kontext eine Angabe des Netzes, das verwendet wurde und / oder des geographischen Ortes, in dem sich das Gerät befand und / oder des Netztechnologietyps und / oder des Betreibers des Netzes und / oder eines Kriteriums umfasst.

8. Verfahren gemäß einem der vorherigen Ansprüche, **dadurch gekennzeichnet, dass** zuvor in einem Speicherbereich jede Gerätekennung erfasst wird, mit deren die Karte in Verbindung gebracht wurde, sowie mit der Konfiguration jedes Geräts verbundene Ereignisse aus wenigstens einer Gruppe der folgenden Ereignisse:
konfiguriertes oder nicht konfiguriertes Gerät,
Anzahl der Konfigurationsanforderungen,
Kontext der Konfiguration.

9. Verfahren gemäß einem der vorherigen Ansprüche, **dadurch gekennzeichnet, dass** die Ereignisse in der Karte gespeichert werden und / oder der Test in der Karte realisiert wird.

10. Abonnentenkennkarte (3), die geeignet ist, mit einem mobilen Kommunikationsgerät (2) zu kooperieren, um einen Kommunikationsdienst in einem Kommunikationsnetz zu erlauben, **dadurch gekennzeichnet, dass** sie eine Anwendung (12) umfasst, die geeignet ist, einen Zustand zu lesen, der einen Konfigurationsbedarf des Kommunikationsgeräts angibt.

11. Abonnentenkennkarte (3) gemäß Anspruch 10, **dadurch gekennzeichnet, dass** sie einen Speicherbereich umfasst, die eine Liste mit Gerätekennungen umfasst, mit denen die Karte in Verbindung gebracht wurde, sowie eine Liste von entsprechenden Ereignissen aus einer Gruppe der folgenden Ereignisse:
konfiguriertes oder nicht konfiguriertes Gerät
Kontext der Konfiguration
Anzahl der Konfigurationsanforderungen.

12. Abonnentenkonfigurationskarte (3) gemäß Anspruch 10 und 11, **dadurch gekennzeichnet, dass** der einen Konfigurationsbedarf angebende Zustand aus zum Netztechnologietyp relativen Angaben gebildet und / oder der Netzbetreiber ist.

13. Kommunikationsnetz, das wenigstens einen Server, eine Serie von Terminalssystemen (MOBILE), das jeweils ein Kommunikationsgerät (2) umfassen, und eine Kennkarte (3) umfasst, **dadurch gekennzeichnet, dass** jede Kennkarte mit Anspruch 10 konform ist.
